# EUROPEAN PATENT APPLICATION

(11) **EP 3 076 619 A1**
(43) Date of publication of application: **05.10.2016**
(21) Application number: 15305487.9
(22) Date of filing: 02.04.2015
(51) Int. Cl.: H04L 12/863, H04L 12/873, H04L 12/911, H04L 12/875

(54) **METHOD, SYSTEM AND COMPUTER-READABLE MEDIUM TO SCHEDULE THE PROCESSING OF A PLURALITY OF DATA PACKETS**

(71) Applicant: ALCATEL LUCENT, 92100 Boulogne-Billancourt (FR)
(72) Inventor: Vermoesen, Luc, 2018 ANTWERP (BE); Tang, Siyu, 2018 ANTWERP (BE)
(74) Representative: Berthier, Karine

(57) **Abstract**

Method, system and computer readable medium to schedule the processing of a plurality of data packets by a system, the said system comprising processing means and transmission means. The said method comprising a step of determining for at least one of the data packets a processing duration of the processing of this data packet, by the processing means, a step of determining for at least one of the data packets an available time slot when the processed data packet can be transmitted by the transmission means and a step of selecting the next data packet to process based on the processing durations and the available time slots.

## Description

### FIELD OF INVENTION

The present subject matter relates to the scheduling of the processing of data packet within a system for example a telecommunication system or a computer located for example in a data center.

### BACKGROUND

In computer or other telecommunication system located for example within a datacenter, service chaining induces applications or components that build up the service chain communicate with one another over a network. In this case the scheduling of the processing of data packet by applications or components is very important in order to process the date just in time to be transmitted to another applications or components.

In case of deadline aware services (for example: live streaming video service or IMS voice streaming service) the timely output delivery of one component towards the next component in the service chain is of importance in the sense that the last component that provides the output to the service consumer needs to deliver its output against a deadline. Another example is e.g. a search request, is also constrained by its deadline, as search results appeared after the required time frame cannot be used, hence, affect the response quality, not to mention wasted bandwidth. Ultimately, this affects operator revenue, for example, an added latency of 100ms costs Amazon 1% of sales.

With the current increase of network capability, by capability we mean capacity or bandwidth (10Gb/s or 40Gb/s links), the operating system (OS) responsiveness, the interrupt handling and request response type of handling etc. cause sub optimal use, from response time/latency point of view, of the network links.

With the increase in compute power and output oriented applications, the network becomes a possible bottleneck for application throughput. For applications where network transport is mainly the bottleneck or the determining factor for application resource consumption efficiency, the compute resources get underutilized. In order to increase overall system throughput, optimal use of networking or transport resources is necessary.

We consider the scheduling as being a method by which threads, processes or data flows are given access to system resources (e.g. processor time, communications bandwidth). This is usually done to load balance and share system resources effectively or achieve a target quality of service. The need for a scheduling algorithm arises from the requirement for most modern systems to perform multitasking (executing more than one process at a time) and multiplexing (transmit multiple data streams simultaneously across a single physical channel).

### SUMMARY

This summary is provided to introduce concepts related to the scheduling of the processing of data packet within a system.

In one implementation a method is described. This method to schedule the processing of a plurality of data packets by a system, the said system comprising processing means and transmission means, comprises a step of determining for at least one of the data packets a processing duration of the processing of this data packet, by the processing means. The method also comprises a step of determining for at least one of the data packets an available time slot when the processed data packet can be transmitted by the transmission means. The method also comprises a step of selecting the next data packet to process based on the processing durations and the available time slots.

In another implementation a system is described. The system comprises processing means adapted to process the data contained within data packets and transmission means adapted to transmit the processed data contained within the data packets. The processing means are associated to a first scheduler and the transmission means are associated to a second scheduler. The second scheduler is configured to determine, associated to at least one of the data packets, an available time slot usable to transmit this processed data packet and the first scheduler is configured to take into account these available time slots.

In another implementation a computer-readable medium is described. The computer-readable medium has embodied thereon a computer program to schedule the processing of a plurality of data packets by a system, the said system comprising processing means and transmission means. The said computer program comprises a step of determining for at least one of the data packets a processing duration of the processing of this data packet, by the processing means. The computer program comprises a step of determining for at least one of the data packets an available time slot when the processed data packet can be transmitted by the transmission means. The computer program comprises a step of selecting the next data packet to process based on the processing durations and the available time slots.

### BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 presents a first embodiment of the method object of the present subject matter.
Figure 2 presents a second embodiment of the method object of the present subject matter.
Figure 3 presents a third embodiment of the method object of the present subject matter.
Figure 4 presents a forth embodiment of the method object of the present subject matter.
Figure 5 presents a first embodiment of the system using the method object of the present subject matter.
Figure 6 presents a second embodiment of the system using the method object of the present subject matter.
Figure 7 presents a fifth embodiment of the method object of the present subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

In cloud system, where more and more compute platforms get interconnected with one-another and service chains tend to spread across multiple machines, an efficient method to schedule the processing of the data packet is very important.

In this kind of system, the scheduling method is of significant importance since they try to optimize the allocation of compute and networking resources which is mostly done based either on:
request for specific size or capability of compute and networking resources and
an average consumption of resources over time and allocating this amount of resources on platforms dedicated to the computing of data or networking.

In this environment, when a specific platform (being used in the service chain) start to get overloaded (e.g. from network transport point of view), the entire service chain is affected. Moreover, due to multi tenancy, the likelihood of other service chains or services hosted on the overloaded compute platform tends to get impacted as well.

In an embodiment we choose to severely impact one or a select set of application(s) or service chain(s) than limitedly impacting all services or applications on the host and causing all services on that host to break their Service Level Agreement (SLAs).

However, depending on how the data is produced and transported between the different components, jitter, burstiness and network peak load increases. Jitter negatively impacts user experience, burstiness and peak load negatively impact network performance and predictability. For deadline aware services, in case the end component misses its deadline, the whole of the resources used by the entire service chain have become redundant due to SLA violation at an aggregated service level.

In another embodiment the compute schedulers mostly focus on efficient or optimal use of compute resources, with tradeoff between latency and throughput. This is for example the compute scheduler as provided in Linux. In this embodiment while compute scheduling tries to optimize the use of compute resources, applications will be scheduled as soon as possible and produce their output as fast as possible with their output being put in buffers and queues for network transport. A resource, or system resource, is any physical or virtual component of limited availability within a computer system. Every internal system component is a resource. Virtual system resources include files (concretely file handles), network connections (concretely network sockets), and memory areas. A compute resource is a resource that supports any goal-oriented activity requiring, benefiting from, or creating algorithmic processes e.g. through computers.

In another embodiment a network scheduler is provided. From networking point of view, network schedulers (mostly on networking cards) focus on efficient or optimal use of networking resources. Using techniques like buffering and queueing, compute and networking resources are interconnected and have therefore timing behavior. However, more queueing and/or buffering negatively impacts overall latency, delay and jitter.

In both of the two previously described embodiments, compute and network schedulers work independently from one another. The current compute scheduler focuses on optimizing either the throughput or latency of tasks running on computing resource.

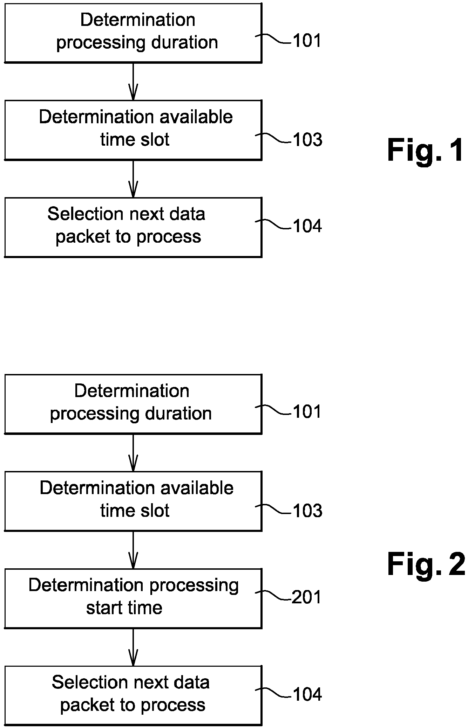

The figure 1 presents another embodiment of the present subject matter. This method is dedicated to schedule the processing of a plurality of data packets by a system. The system comprises processing means and transmission means. The method comprises;
a step 101 of determining for at least one of the data packets a processing duration of the processing of this data packet, by the processing means,
a step 102 of determining for at least one of the data packets an available time slot when the processed data packet can be transmitted by the transmission means,
a step 103 of selecting the next data packet to process based on the processing durations and the available time slots.

In an embodiment the processing duration, also known as estimated processing duration, is determined via observing the output of compute/application/service. So, whenever the application/service runs we register time stamps, corresponding to the beginning of the production of the packet, and also observe when the service produces an output packet. Both observations allow determining an estimated processing duration to produce an output packet. This estimated time can then be used to determine when a service must be scheduled or run on compute resources.

In an embodiment the step 103 of selecting the next data packet is realized by selecting the data packet with the time of end of processing the closest to the available time slot, if the processing of this data packet were started immediately. The time of end of processing is determined according to the processing duration.

In an embodiment presented in figure 2, the method also comprises;
a step 201 of determining a processing start time associated to at least one of the data packets based on the processing durations and the available time slots;
and the step 103 of selecting the next data packet to process is also configured to select the data packet according the their associated available time slot.

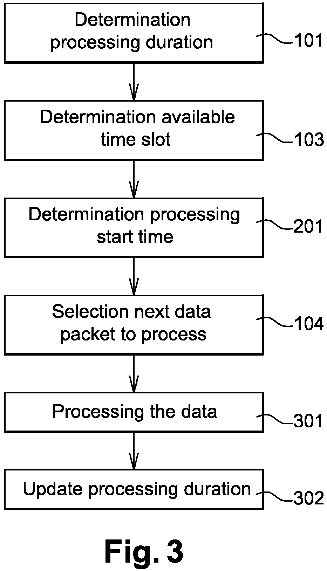

In an embodiment presented figure 3, the method also comprises;
a step 301 of processing the data of the selected data packet and eventually further to this step a step 302 of updating the processing durations associated to the data packets.

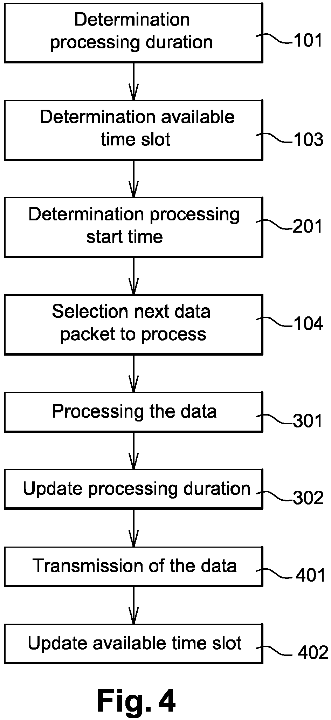

In an embodiment presented figure 4, the method also comprises;
a step 401 of transmitting the processed data packet via the network interface and eventually further to this step a step 402 of updating the available time slot associated to the data packets.

In an embodiment the step 103 of selecting the next data packet to process is also configured to determine a total duration during which a data packet has been process and to select the next data packet among the data packet associated to a total processing duration not exceeding a predetermined time.

In an embodiment the step 103 of selecting the next data packet to process is configured to "time-stamp" the data packets. This step is realized by registering the actual time the transmission of the data packet occurs.(this can be the time the buffer associated to the application is read by the networking subsystem.

In another embodiment a system is proposed. This system comprises processing means adapted to process the data contained within data packets, and transmission means adapted to transmit the processed data contained within the data packets. The processing means are associated to a first scheduler and the transmission means are associated to a second scheduler. In this system the second scheduler is configured to determine, associated to at least one of the data packets, an available time slot usable to transmit this processed data packet and the first scheduler is configured to take into account these available time slots, whereby the metric available to the first scheduler is a network metric related to time distance to deadline.

In another embodiment of this system, the second scheduler is a robust earliest deadline scheduler or a weighted robust earliest deadline scheduler.

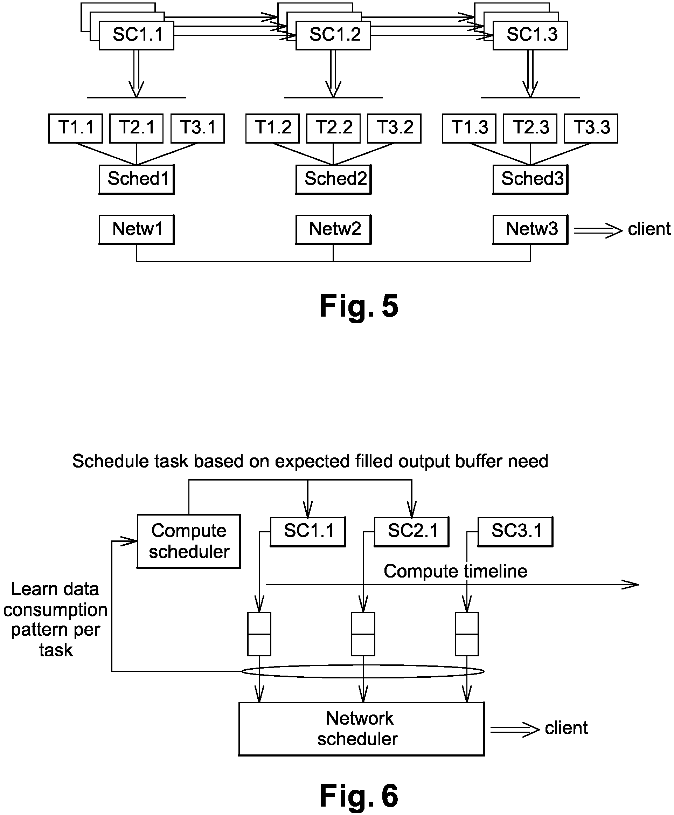

In figure 6 the arrow denoting "learn data consumption pattern per task" gives an indication about the network metric feedback. In this case, the network scheduler picks packets for immediate transport. The compute domain, observing when the buffer is read by network scheduler therefore knows about the deadline of packet transmission.

In another embodiment a server is proposed. This server comprises a motherboard which has a central processing unit (CPU) and also has a network interface. In an option all these elements are located within the same chipsets which have central processing unit and interconnects to network. This chipset can also contain a serial bus using different standards as the generally known Universal Seri Bus USB standard. In other options the network interface can also be a separate card in the server that is interconnected with the central processing unit via for example a PCIe connection.

In this embodiment the operating system software running on this server (e.g. Linux) has a compute scheduler that schedules all the processes and tasks that need to run on the server (all kinds of processes like database applications, multi-media applications, video rendering applications, etc.). Some existing compute scheduler algorithms are "Completely Fair Scheduler", "fair share scheduler" or "sched deadline".

The "fair share scheduler ensures that the CPU usage is equally distributed among system users or groups, as opposed to equal distribution among processes.

The Completely fair scheduler is a process scheduler that handles CPU resource allocation for executing processes, and aims to maximize overall CPU utilization while also maximizing interactive performance (benefitting user-interactivity experience).

The "sched deadline" is a scheduling class for resource-reservation real-time CPU scheduler in Linux, implementing the Earliest Deadline First algorithm (EDF), Concerning the "schede deadline" algorithm in detail, it uses three parameters, named "runtime", "period", and "deadline" (more specifically compute deadline, by compute deadline we mean a deadline that is characterized or determined at the level of the compute domain), to schedule tasks. "runtime" is the time that a task should receive to run. "period" determines the interval at which "runtime" must be made available. "deadline" is the time that the task needs to have completed its functionality otherwise, the scheduler will interrupt the task and a deadline-miss is accounted for. In order to implement this sched_deadline behaviour, every time a task wakes up, the scheduler computes a "scheduling deadline" consistent with the guarantee using the CBS algorithm. The CBS (Constant Bandwidth Server) algorithms assigns scheduling deadlines to tasks so that each task runs for at most its runtime every period, avoiding any interference between different tasks (bandwidth isolation), while the EDF algorithm selects the task with the earliest scheduling deadline as the one to be executed

We define the compute subsystem as all the resources on a server that comprise compute related aspects (CPU, memory, operating system allowing to run processes, processes themselves).

In this embodiment, the network interface has a packet scheduler that schedules the packets from the different streams, from applications running in the compute subsystem towards the network and vice versa. Some examples or packet schedulers are "Robust Earliest DeadLine Scheduling (RED)", "weighted RED". Earliest deadline scheduling or least time to go is a dynamic scheduling algorithm that puts processes in a priority queue. Whenever a scheduling event occurs (task finishes, new task released, etc.) the queue will be searched for the process closest to its deadline. This process is the next to be scheduled for execution. The "Robust" qualifier of this algorithm refers to overload situations where there are more resources needed then that there are available where dynamic guarantees are used. The Robust ED algorithm specifies a task deadline and importance by introducing two additional parameters into the task model: 1. a task value that reflects the importance of the task in the set (e.g. "critical" and "hard"), and 2. a deadline tolerance that is the amount of time by which a specific task is permitted to be late. (e.g. task with "critical": in overload situation, this task is allowed to be late to complete its task; a task with "hard" during overload will be interrupted when deadline is encountered. We define the network subsystem as all the resources on a server to transport information from and to the server.

In order to help clarify the way the system object of the previous embodiment is working, we consider an application running on a server, for example a video player, and that wants to transport (using network subsystem) its output processed data, for example as packets via a buffer or queue, to another server, for example a media transcoding server.

In network resource constrained systems (which is almost all of them considering the compute capabilities compared to the interconnection capabilities of a lot of commercially available servers for cloud architectures), the basic idea of the present subject matter is to feed back a network metric (coming from the network subsystem) into the compute scheduler whereby the network metric is related to time distance to deadline and to have the compute scheduler schedule tasks/processes so that an application's output buffer that needs to be transmitted is prepared in a "just in time" manner. The packet scheduler in the network subsystem then immediately transports the buffer's content so that the packet arrives before deadline.

In other words, the core of the present subject matter comprises
1. The fact of feeding an "external" metric into the compute scheduler and
2. The methodology of the scheduler to schedule the tasks with expected outcome, e.g., reduced latency, but not with the aim of optimizing the throughput.
Indeed, for any type of scheduler, a common parameter is, let's say bandwidth, the available resource to schedule the incoming jobs/tasks. If jobs are served in a first-come-first-serve fashion, an extra parameter of buffer/queue size Q is taken into account. The throughput, is therefore, determined by the sum of bandwidth and Q, as jobs that cannot be served by the scheduler will be temporarily buffered/queued. An Earliest Deadline First (EDF) scheduler, on the other hand, serves the incoming jobs based on the urgentness of their deadline requirements. This, however, does not mean that an Earliest Deadline First scheduler cannot fully explore the available network resource bandwidth. In fact, an Earliest Deadline First scheduler always tries to schedule the incoming jobs with its the maximal capacity bandwidth. Jobs whose deadlines will be violated due to insufficient resource will simply be dropped (instead of being buffered/queued), as processing a job after its deadline requirement is no long of interest.

In other embodiments of the present subject matter a so called hybrid solution is used. In this the two following optimization can be used:
1. when no deadline information is provided by the incoming packets, optimize the throughput;
2. when deadline information is detected, optimize the latency.

The figure 5 presents an example of the usage of the previous subject matter. In this example we consider a service chain comprising:
- video playback application running on server 1, the output of this playback is transported to
- video scaling and format re-encoder application on server 2, the output of this server is transported to
- a video compositing application on server 3 that sends the composed video stream to the end-user.

Furthermore, there are three of these service chains running in parallel.

A service chain could also be denoted as a 'service' in the rest of this divulgation, each application that is part of the service is indicated as a service component.

According to the example of figure 5 service 1 consists out of 3 components or applications, SC1.1, SC1.2 and SC1.3 and each component or application is mapped on a different server. Multi-tenancy is modeled trough presence of Service2 and Service3. (upfront, this ordering is merely for explaining the principle. Any service composition and mapping to interconnected compute platforms will do as well)

A multimedia streaming service is assumed, producing video frames every 40msec (25FPS). T1.1 denotes a Task or process that runs application SC1.1 on server1. T1.3 denotes a task running on server 3. Netw1 denotes a network interface in server 1 that is being used by T1.1 for network data exchange. The description of the example will occur in reverse manner (describing for Service1 (S1) first service component SC1.3, then SC1.2 , then SC1.1).

Assume a 2-buffer ring or scheduler between task and network on a server (e.g 1 video frame in buffer size can be stored between the T1.3 and Netw3 (idem for T1.2 and Netw2 and T1.1 and Netw1) (idem for S2 and S3) The work T1.3 is the process that runs the SC1.3 application and produces as output a video frame that needs to be transported to application S1.2 The work T1.3 is estimated to run for e.g. <T1.3t5> time (e.g. 5msec) on server 3.

In this example, just before the actual frame needs to be output by SC1.3 towards client, the Sched3 schedules T1.3 so that it produces the frame and which video content is put in the buffer ready for transmission by Netw3 to the client. Netw3 will select a buffer for transmission based on the expected time to processing time (this latter is done by the packet scheduler in the network subsystem of server3).

Due to multi-tenancy, SC2.3 and SC3.3 also need compute and network resources so that their service is also delivered.

The figure 6 presents another example of the usage of the method object of the present subject matter. In this example a network packet handles network element that keeps this two-buffer ring per application and uses a weighted packet scheduler over the different applications with weight being the shortest time distance to actual transmission is scheduled first (earliest deadline first packet scheduling).

In order to handle these constraints we use a Central Processing Unit CPU scheduler that can take into account a network metric per task indicating the order in which to schedule the different tasks. Therefore, the compute scheduler will schedule SC1.3, SC2.3 and SC3.3 in the order that buffer information should become available and should be transmitted. This allows shaping the output of the different tasks over time.

In some embodiments multiple queues are used (one per task), with a metric for each that is to be interpreted with inverse of priority. It is this metric that is fed back into the compute scheduler. The compute scheduling metric can, for example, be obtained through system time-stamping the applications buffer readout by the networking layer. By looking at which intervals the networking layer is actually reading/transporting the data, the compute layer can predict when next read-timestamp will occur and from there make the necessary calculation when a task should be scheduled. An alternative way is that the networking layer reads the deadline information from the transport protocol and provides feedback information to the compute domain about the packet timing.

This combined approach of network and compute scheduling would allow for an evenly distributed load pattern at the level of the networking layer. (Reducing jitter and burst at the source with optimal network usage). We can note that due to the scheduling of SC1.3, data produced by SC1.2 and sent to SC1.3 will be consumed.

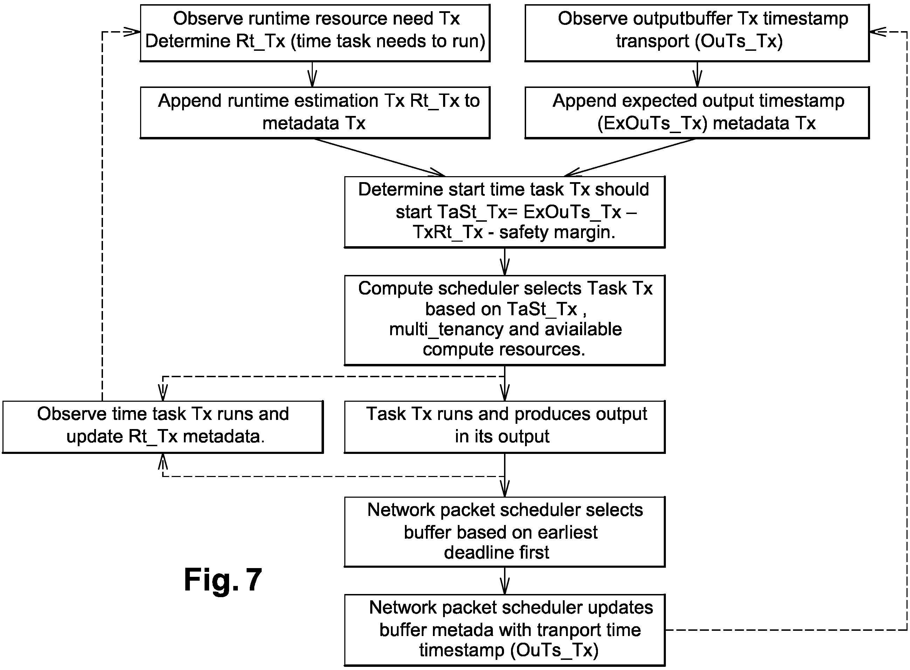

The figure 7 presents another embodiment of the present subject matter. In this embodiment the network element (packet scheduler) informs the compute scheduler the order in which it expects the networking buffers to be filled with data and at what expected time it would need this data (note that practically, the information about order of buffer filling and therefore task scheduling is handled autonomously by the compute layer through observation of the consumption pattern of the output buffers).

The task scheduler, through estimation of expected needed runtime per task/service component to produce the data needed by the network, can then schedule the tasks appropriately so that their data arrives in their buffers in a "just in time" like of manner.

For the compute scheduler, determining the time distance to deadline occurs at application level, whereby application system time stamping gives a compute deadline. With a safety margin applied onto the compute capacity planned for a task (e.g. amount of time, 5msec + 20% e.g.)

At networking level, time stamping all traffic allows sender/receiver to learn about deadline that should be respected. Some protocols available are e.g. SCAP (Shared Content Addressing Protocol). In a multi-hop scenario, once deadline violation occurs, packet drops will be issued and instant feedback provided towards upstream services that are part of the service chain thus avoid unnecessary resource consumption (be it network or compute resources).

Any scheduling induced delays (theoretical scheduled versus actually scheduled.) need to be accounted for. (one could go for a simple metric in a low overhead approach (e.g. simple "last value like prediction").

The compute scheduler will allow a task to run to completion to process the work unit unless the task exceeds its allocated (estimated) resource budget. (note that this can be realized with pre-emptive scheduling whereby a task can be scheduled again and again until the work is done or until the scheduler determines that the task has consumed its budget (safety margins can apply (under-subscription of resource usage). The compute scheduler indicates to the service component a budget overrun so that the component can act upon this in the next scheduled compute resource usage slots.). All this can be compensated by scheduling the task/component at hand with some margin before its end.

Regarding the inter-server communication (e.g. S1.2 output to S1.3. input.):
Either the servers work autonomously which will possibly lead to an overall longer latency considering the entire data transport.
Either the packet schedulers of the different servers communicate deadlines about their streams with one another so that overall transport latency can be minimized.

An embodiment of the present subject matter the method is implemented within a system comprising one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter is a computer program, configured to realize the method described figure 1. This method is dedicated to schedule the processing of a plurality of data packets by a system. The system comprises processing means and transmission means. The method comprises;
a step 101 of determining for at least one of the data packets a processing duration of the processing of this data packet, by the processing means,
a step 102 of determining for at least one of the data packets an available time slot when the processed data packet can be transmitted by the transmission means,
a step 103 of selecting the next data packet to process based on the processing durations and the available time slots.

An embodiment of the subject matter is a computer program, configured to realize the method described figure 2. This method is dedicated to schedule the processing of a plurality of data packets by a system. The system comprises processing means and transmission means. The method comprises the step of the figure 1 and the other following steps;
a step 201 of determining a processing start time associated to at least one of the data packets based on the processing durations and the available time slots;
and the step 103 of selecting the next data packet to process is also configured to select the data packet according the their associated available time slot.

An embodiment of the subject matter is a computer program, configured to realize the method described figure 3. This method is dedicated to schedule the processing of a plurality of data packets by a system. The system comprises processing means and transmission means. The method comprises the step of the figure 1 and the a step 301 of processing the data of the selected data packet and eventually further to this step a step 302 of updating the processing durations associated to the data packets.

An embodiment of the subject matter is a computer program, configured to realize the method described figure 4. This method is dedicated to schedule the processing of a plurality of data packets by a system. The system comprises processing means and transmission means. The method comprises the step of the figure 1 and the a step 401 of transmitting the processed data packet via the network interface and eventually further to this step a step 402 of updating the available time slot associated to the data packets.

## Claims

1. Method to schedule the processing of a plurality of data packets by a system, the said system comprising processing means and transmission means, the said method comprising;
a step (101) of determining for at least one of the data packets a processing duration of the processing of this data packet, by the processing means,
a step (102) of determining for at least one of the data packets an available time slot when the processed data packet can be transmitted by the transmission means,
a step (103) of selecting the next data packet to process based on the processing durations and the available time slots.

2. Method according to claim 1 also comprising;
a step (201) of determining a processing start time associated to at least one of the data packets based on the processing durations and the available time slots;
the step (103) of selecting the next data packet to process is also configured to select the data packet according the their associated available time slot.

3. Method according to claim 1 or 2 also comprising;
a step (301) of processing the data of the selected data packet.

4. Method according to claim 3 also comprising further to the step (301) of processing the data of the selected data packet;
a step (302) of updating the processing durations associated to the data packets.

5. Method according to any of the previous claim also comprising;
a step (401) of transmitting the processed data packet via the network interface.

6. Method according to the claim 5 also comprising, further to the step (401) of transmitting the processed data packet via the network interface;
a step (402) of updating the available time slot associated to the data packets.

7. Method according to any of the previous claims wherein;
the step (103) of selecting the next data packet to process is also configured to determine a total duration during which a data packet has been process and to select the next data packet among the data packet associated to a total processing duration not exceeding a predetermined time.

8. Method according to any of the previous claims wherein;
the step of (103) selecting the next data packet to process is configured to "time-stamp" the data packets.

9. System comprising;
processing means adapted to process the data contained within data packets, transmission means adapted to transmit the processed data contained within the data packets,
the processing means are associated to a first scheduler and the transmission means are associated to a second scheduler,
wherein the second scheduler is configured to determine, associated to at least one of the data packets, an available time slot usable to transmit this processed data packet and the first scheduler is configured to take into account these available time slots

10. System according to claim 9 wherein the second scheduler is a robust earliest deadline scheduler or a weighted robust earliest deadline scheduler.

11. A computer-readable medium having embodied thereon a computer program to schedule the processing of a plurality of data packets by a system, the said system comprising processing means and transmission means, the said computer program comprising;
a step (101) of determining for at least one of the data packets a processing duration of the processing of this data packet, by the processing means,
a step (102) of determining for at least one of the data packets an available time slot when the processed data packet can be transmitted by the transmission means,
a step (103) of selecting the next data packet to process based on the processing durations and the available time slots.

## Amended claims

### Amended claims in accordance with Rule 137(2) EPC.

1. Method to schedule the processing of a plurality of data packets by a system, the said system comprising processing means and transmission means, the said method comprising;
a step (101) of determining for at least one of the data packets a processing duration of the processing of this data packet, by the processing means,
a step (102) of determining for at least one of the data packets an available time slot when the processed data packet can be transmitted by the transmission means,
a step (103) of selecting the next data packet to process based on the processing durations and the available time slots,
the said method being **characterized in that**;
the selection step is realized by a first scheduler associated to the processing means, and
the two determination steps are realized by a second scheduler associated to the transmission means.

2. Method according to claim 1 also comprising;
a step (201) of determining a processing start time associated to at least one of the data packets based on the processing durations and the available time slots;
the step (103) of selecting the next data packet to process is also configured to select the data packet according the their associated available time slot.

3. Method according to claim 1 or 2 also comprising;
a step (301) of processing the data of the selected data packet.

4. Method according to claim 3 also comprising further to the step (301) of processing the data of the selected data packet;
a step (302) of updating the processing durations associated to the data packets.

5. Method according to any of the previous claim also comprising;
a step (401) of transmitting the processed data packet via the network interface.

6. Method according to the claim 5 also comprising, further to the step (401) of transmitting the processed data packet via the network interface;
a step (402) of updating the available time slot associated to the data packets.

7. Method according to any of the previous claims wherein;
the step (103) of selecting the next data packet to process is also configured to determine a total duration during which a data packet has been process and to select the next data packet among the data packet associated to a total processing duration not exceeding a predetermined time.

8. Method according to any of the previous claims wherein;
the step of (103) selecting the next data packet to process is configured to "time-stamp" the data packets.

9. System comprising;
processing means adapted to process the data contained within data packets,
transmission means adapted to transmit the processed data contained within the data packets,
the processing means are associated to a first scheduler and the transmission means are associated to a second scheduler,
wherein the second scheduler is configured to determine, associated to at least one of the data packets, an available time slot usable to transmit this processed data packet and the first scheduler is configured to take into account these available time slots and a processing duration of the data of the data packets.

10. System according to claim 9 wherein the second scheduler is a robust earliest deadline scheduler or a weighted robust earliest deadline scheduler.

11. A computer-readable medium having embodied thereon a computer program to schedule the processing of a plurality of data packets by a system, the said system comprising processing means and transmission means, the said computer program comprising;
a step (101) of determining for at least one of the data packets a processing duration of the processing of this data packet, by the processing means,
a step (102) of determining for at least one of the data packets an available time slot when the processed data packet can be transmitted by the transmission means,
a step (103) of selecting the next data packet to process based on the processing durations and the available time slots
the said method being **characterized in that**;
the selection step is realized by a first scheduler associated to the processing means, and
the two determination steps are realized by a second scheduler associated to the transmission means.
